# EUROPÄISCHE PATENTSCHRIFT

(11) **EP 1 262 727 B1**
(45) Veröffentlichungstag und Bekanntmachung des Hinweises auf die Patenterteilung: **13.09.2006**
(21) Anmeldenummer: 02011506.9
(22) Anmeldetag: 22.05.2002
(51) Int. Cl.: F26B 17/10, F26B 21/08

(54) **Vorrichtung zur Saug- oder Druckförderung von staub- oder granulatförmigen Material**
Apparatus utilizing gas suction or pressure for transporting dust-like or granular material
Dispositif utilisant l'aspiration ou la pression de gaz pour le transport de matériau pulvérulent ou granulaire

(30) Priorität: 31.05.2001 AT 8512001
(43) Veröffentlichungstag der Anmeldung: 04.12.2002
(73) Patentinhaber: Luger Gesellschaft m.b.H., 3011 Purkersdorf (AT); Baratti Engineering GmbH, 79664 Wehr (DE); Bar, Horst, 5440 Golling (AT)
(72) Erfinder: Luger, Willibald, 3002 Purkersdorf (AT); Bar, Horst, 5440 Golling (AT); Baratti, Gerhard, 79664 Wehr (Brennet) (DE)
(74) Vertreter: Puchberger, Peter

(56) Entgegenhaltungen:
- DE-A- 3 936 009
- US-A- 4 570 360
- US-A- 4 917 544
- US-A- 4 974 337
- US-A- 5 513 445
- US-A- 6 049 997

## Beschreibung

Die Erfindung betrifft eine Vorrichtung zur Saug- oder Druckförderung von staub- oder granulatförmigem Material, wobei ein Gebläse zur Luftförderung vorgesehen ist, und wobei zumindest ein Trockner und/oder eine Absorptionskolonne vorgesehen ist.

Zur Förderung von staub- oder granulatförmigern Material wird vielfach eine Saugförderung oder Druckförderung verwendet. Bei der Saugförderung wird durch ein Gebläse in einer Vakuumhauptleitung Unterdruck erzeugt, der über ein Saugrohr Luft und das Material ansaugt und damit transportiert. Analog wird bei der Druckluftförderung die Abluft eines Gebläses zum Transport des Materials verwendet. Bekannt ist es, die Förderluft abluftseitig mit möglichst geringem Widerstand durch Filter zu leiten und in die Umgebung abzuführen oder dem Luftkreislauf wieder zuzuführen. Die Abluft enthält im wesentlichen nur kinetische Energie.

Weiters ist es bekannt, die Trocknung feuchter, staub- oder granulatförmiger Materialien mit erhitzter Luft durchzuführen. Ein Beispiel dafür sind Ein- oder Mehrzonen-Trocknungsanlagen, in die das feuchte Schüttgut von oben zugefügt, durch aufsteigende warme Luft getrocknet und unten als getrocknetes Granulat wieder abgeführt wird. Das Erhitzen der Trocknungsluft erfolgt über Heizeinrichtungen.

Bisherige Vorrichtungen zur Saug- oder Druckförderung sowie zur Trocknung von staub- oder granulatförmigem Material wie beispielsweise die in der DE-A- 39 36 009 beschriebene Anlage zeigt zwar eine Vorrichtung zur Saug- oder Druckförderung sowie zur Trocknung von staub- oder granulatförmigem Material, doch unterscheidet sie sich von der vorliegenden Erfindung dadurch, dass im Saug- oder Förderbetrieb die Abwärme des Gebläses nicht zur Trocknung verwendet, sondem an die Umwelt abgegeben wird, und im Trockenbetrieb keine Förderung möglich ist. Das bedeutet, dass bei belden Betriebsarten ein großer Teil der durch das Gebläse erbrachten Arbeit ungenützt abgegeben wird.

Bei anderen Veröffentlichungen wie beispielsweise der US 4 570 360, der US 4 974 337 und der US 5 513 445 handelt es sich um Vorrichtungen zur Trocknung von staub- oder granulatförmigen Materialien, die zur Erzeugung der Trocknungswärme elektrische Heizungen benötigen. Genau diese sollen durch die vorliegende Erfindung aber weitgehend vermieden werden, da sie in der Anschaffung sowie im Betrieb sehr kostenintensiv sind.

Das Verfahren, Wärme durch die Komprimierung eines Arbeitsmediums zu erzeugen, ist bei wärmetechnischen Maschinen schon lange bekannt und gebräuchlich. Die US 6 049 997 beispielsweise beschreibt solch eine Vorrichtung. Sie dient aber nicht der Förderung von staub- oder granulatförmigem Material.

Der gegenständlichen Erfindung liegt die Erkenntnis zugrunde, dass die durch bestimmte Gebläse der Saug- oder Druckförderung in das System hineingesteckte Verdichtungsenergie direkt für die Warmlufttrocknung herangezogen werden kann. Aufgabe der vorliegenden Erfindung ist es somit, eine Saug- oder Druckförderungsanlage mit einer Trocknungsanlage derart zu verbinden, dass möglichst geringe Energie und möglichst geringer apparativer Aufwand geleistet werden muss.

Die erfindungsgemäße Vorrichtung ist dadurch gekennzeichnet, dass am Gebläse Leitungen zum Führen der verdichteten und erhitzten Abluft angeordnet sind und mit dem Trockner und/oder den Absorptionskolonnen zur Zufuhr der während des Fördervorgangs entstehenden Abluft verbunden sind.

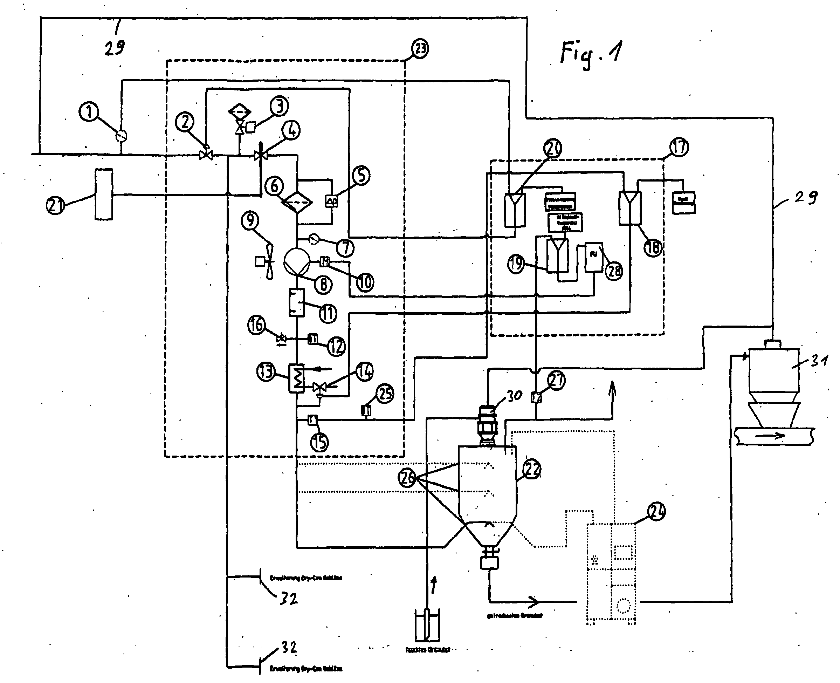

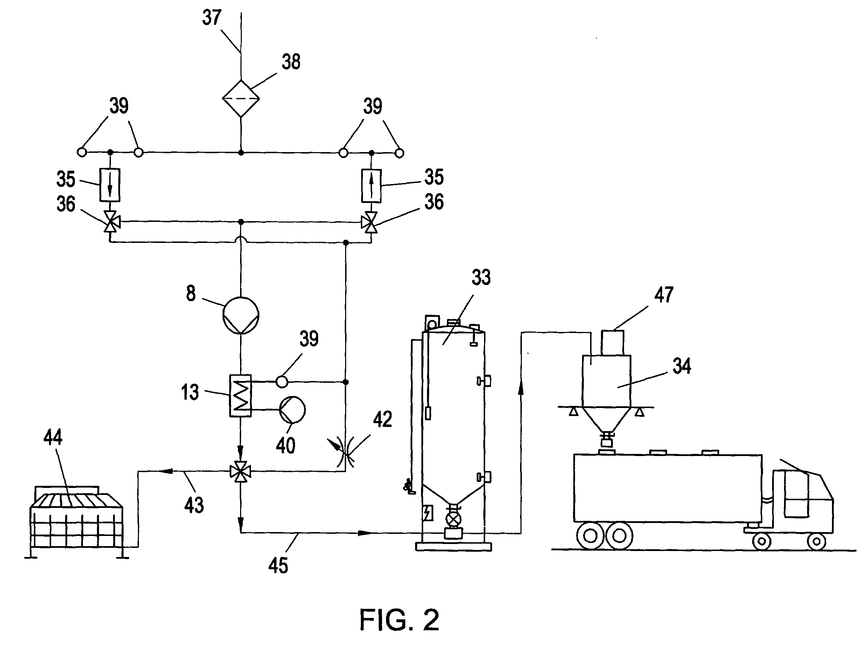

Weitere Merkmale der Erfindung sind den Ansprüchen sowie der Zeichnung und der Beschreibung zu entnehmen. Fig. 1 zeigt eine Anlage mit Saugförderung und Fig. 2 eine Anlage mit Druckförderung als Prozeßschema.

Der Prozeß gemäß Fig. 1 umfasst in einer Anlage die Förderung und gleichzeitige Trocknung mit einem Gebläse oder Verdichter. Das Gebläse wird gleichzeitig für das Erzeugen des Vakuums (Unterdruck) zur Granulatförderung an der Ansaugseite und zur Erzeugung der heißen Trocknungsluft auf der Abluftseite und für die Erwärmung des Granulates eingesetzt. Der Prozess kann in den verschiedensten Bereichen wie Kunststoffgranulatverarbeitung oder Lebensmittelindustrie eingesetzt werden.

In Fig. 1 ist eine Anlage zur Saugförderung und Trocknung von Kunststoffgranulaten dargestellt. Das Gebläse 8 ist auf der Saugseite an die Vakuumhauptleitung 29 des Vakuumfördersystems für das Kunststoffgranulat angeschlossen. Die Regelung des Unterdrucks in der Vakuumleitung erfolgt über den Vakuumregelkreis 20 (SPS-Steuerung), in welchem der Vakuum-Sollwert eingegeben wird und über den Druckaufnehmer 1 ständig verglichen wird. Das Vakuumregelventil 2 regelt den Volumendurchfluss so, dass der gewünschte Sollwert in der Vakuumleitung konstant bleibt. Um einen konstanten Volumenstrom für die Trocknung zu erreichen, ist nach dem Drosselventil 2 ein federbelastetes Vakuumbegrenzungsventil 4 angeordnet, welches einmal eingestellt, den Unterdruck zwischen Drosselventil und Vakuumgebläse konstant hält. Über das Ventil 4 kann auch ein Zusatzluftzutritt erfolgen, z.B. mit erhöhter Lufttemperatur, um etwaige niedere Temperaturen der über die Vakuumhauptleitung 29 angesaugte Luft anzuheben. Typischerweise stammt die Kaltluft aus einem Außensilo und die Zusatzluft aus dem Betriebsgebäude. Über ein Trockenrad 21 kann die Zusatzluft getrocknet sein. Im Ansaugbereich kann optional ein Anlaufentlastungsventil 3 angeordnet sein, welches bei Frequenzsteuerung des Gebläsemotors 10 entfallen kann.

Mit Hilfe des Ansaugfilters 6 und des Filterwiderstandsmessers 5 wird das Gebläse vor dem Ansaugen von Feststoffen geschützt und auf Verschmutzung überwacht. Mit 7 ist ein Ansaugdruckanzeiger bezeichnet.

Das Gebläse ist zur abluftseitigen Luftverdichtung ausgebildet und bevorzugt ein Wälzkolbengebläse. Es können aber auch z.B. Kolbenverdichter, Seitenkanalgebläse oder Schraubenverdichter Verwendung finden. Der Gebläsemotor 10 ist bevorzugt ein frequenzgesteuerter Motor, um die Drehzahl und damit die Förderleistung steuern zu können. Mit 9 ist eine Gebläsekühlung eingezeichnet.

Abluftseitig ist am Gebläse ein Druckschalldämpfer 11 angeschlossen, dem ein wassergekühlter Kühler 13, eine Ablufttemperaturanzeige 12 und ein Überdruckventil 16 nachgeschaltet ist. Der Kühler dient dazu, die Ablufttemperatur, die nach dem Kühler durch den Trocknungstemperaturgeber 15 gemessen wird, für die Trocknung auf einem konstanten Niveau zu halten. Die Regelung der Kühlwasserzufuhr erfolgt über den Ablufttemperaturregelkreis 18, in welchem die Solltemperatur eingegeben und mit der tatsächlichen Ablufttemperatur T1 (angezeigt bei 25) und mit dem Kühlwasserregelventil 14 verglichen werden kann.

Die Abluft gelangt auf die gewünschte Temperatur, erwärmt die jeweilige Zone gemäß den Bezugszeichen 26 im Trocknungstrichter 22. Je nach zu trocknendem Material kann an die unterste Position 26 ein geschlossenes Trockenluft-Trocknersystem 24 angeschlossen werden.

In der Figur 1 befinden sich die im Bereich 23 eingerahmten Teile am Gebläse mit einer Schallhaube (Option). Durch die Schall-Wärmedämmhaube wird zusätzlich die Abstrahlungswärme des Gebläses (ca. 15 % der Antriebsleistung) in den Trockenprozess durch Ansaugen in der Haube mit dem Ventil 4 eingebracht. Die Teile im Bereich 17 befinden sich in einem elektrischen Schaltschrank.

Im Schaltkasten befinden sich optional ein Rücklufttemperaturregelkreis 19 und der Frequenzumformer 28 sowie der Ablufttemperaturregelkreis 18. Weiters ist der Vakuumförderungsregelkreis 20 enthalten, der mit dem Druckaufnehmer 1 und dem Vakuumregelventil 2 zusammenwirkt.

An die Vakuumhauptleitung 29 sind alle Verbraucher des Systems zur Förderung angeschlossen, z.B. der Abscheider 30 auf dem Trocknungstrichter 22 zum Transport des feuchten Materials und ein weiterer Abscheider 31 zum Transport des trockenen Granulates vom Trockentrichter 22 zu einem Extruder, Silo oder einer anderen Verarbeitungsstation.

Bei der erfindungsgemäßen Vorrichtung wird in vorteilhafter Weise die Verdichtungsenergie, die für die Saugförderung erforderlich ist, direkt für die Trocknung weitergeleitet. Der gesamte apparative und energetische Aufwand ist gering gegenüber dem Stand der Technik.

Die Gebläseauslegung für die erfindungsgemäße Vorrichtung wird bevorzugt aufgrund der erforderlichen Wärmeleistung für die Trocknung ausgelegt. Dadurch kann ein Überschuss an Volumen für die Vakuumförderung entstehen. Wenn aufgrund von geringerem Materialdurchsatz die Trocknungskapazität nicht benötigt wird, dient der Rücklufttemperaturregelkreis 19 über die Ablufttemperatur T2 mit dem Geber 27 am Trocknungstrichter 22 dazu, bei überhöhter Temperatur T2 das Gebläse über den Frequenzumformer 28 in der Kapazität und damit auch im erforderlichen Antriebsleistungsbereich zurückzuregeln.

Nachstehend werden beispielsweise einige Leistungsbereiche dargestellt:

**Vakuumförderung:**

| | |
|---|---|
| Unterdruckbereich: | -0,3 bar bis 0,5 bar |
| Luftmengen: | 440 m³/h/Gebläse bis 6000 m³/h/Gebläse |
| Durchsatz: | 1000 kg/h/Gebläse bis 15000 kg/h/Gebläse |

**Trocknung bzw. Vortrocknung:**

| | |
|---|---|
| Luftmengen: | 350 m³/h/Gebläse bis 5000 m³/h/Gebläse |
| Durchsatz: | 200 kg/h/Gebläse bis 2500 kg/h/Gebläse |

Bei Verbundanlagen können mehrere Gebläse parallel (z.B. bei den Anschlüssen 32) an das zentrale Vakuumsystem und mehrere Trocknungstrichter 22 angeschlossen werden.

Die Fig. 2 zeigt das Schema einer Druckfördereranlage, bei der ebenfalls die Verdichtungsenergie des Gebläses zum Trocknen verwendet wird. In der Figur ist als Ausführungsbeispiel eine Schüttgut- Druckförderung von einem Lagersilo 33 zu einer Abfüllanlage 34 dargestellt. Dabei ist davon auszugehen, dass das Gebläse 8 nur einen Teil der Betriebszeit (z.B. 70%) für den eigentlichen Fördervorgang eingesetzt wird. Für den übrigen Zeitabschnitt wird das Gebläse für die Regeneration der Saugseiten-Absorptionskolonnen 35 verwendet. Beim Einschalten des Gebläses 8 sind 3-Wegeventile 36 so geschaltet, dass die Ansaugluft 37 des Gebläses 8 über eine Absorptionskolonne 35 geführt und somit vor Erreichen des Gebläses getrocknet wird. Diese Luft, die zuvor im Ansaugfilter 38 von Feststoffen gereinigt wurde, wird durch den Verdichtungsvorgang im Gebläse 8 erhitzt. Mit dem Bezugszeichen 39 sind zwei mechanische Rückschlagklappen bezeichnet.

Bei temperaturempfindlichen Produkten wird die Abluft des Gebläses 8 im Kühler 13 entsprechend gekühlt und die abzuführende Wärme mit Hilfe eines Regenerationsgebläses 40 während des Fördervorganges zur Regeneration der Absorptionskolonne 35, die nicht dem Gebläse zugeschaltet ist, verwendet. Nach Beendigung des Förderzyklus wird das 4-Wegeventil 41 zum Regenerieren umgeschaltet. Dadurch wird die Gebläseabluft über den Drosselschieber 42 zur Regeneration der Absorptionskolonnen 35 geführt.

Am Drosselschieber 42 wird der Abluftdruck so hoch eingedrosselt, dass die erforderliche Lufttemperatur zur Regeneration des Absorptionsmittels erreicht wird. Sobald eine neue Anforderung zur Druckförderung besteht, schaltet das 4-Wegeventil 41 wieder um auf "Fördern".

Wenn die regenerierende Kolonne vollständig regeneriert ist und keine Anforderung zur Förderung ansteht, schaltet das Gebläse aus oder schaltet auf "Trocknen", sodass der Abluftstrom der getrockneten und erhitzten Luft über die Leitung 43 dem Trockner 44 zugeleitet wird, der in Fig.2 zur Oberflächentrocknung von Schüttgut ausgebildet ist.

Die Restfeuchte des Absorptionsmittels und damit die Umschaltung der Absorptionskolonnen 35 (Fördem-Regenerieren) wird über Feuchtigkeitssensoren in den Absorptionskolonnen kontrolliert.

Somit wird bei der dargestellten Anlage die Verdichtungswärme, die beim Fördervorgang entsteht, entweder zur Regeneration des Absorptionsmittel, oder zur Trocknung des Produktes verwendet.

Bei Stellung des 4-Wegeventiles 41 auf "Fördern" gelangt die erhitzte Luft über die Leitung 45 zum Lagersilo 33 und fördert von dort unter gleichzeitiger Trocknung des Materials mittels einer Austragschleuse 46 zur Abfüllanlage 34, die einen Ausblasfilter 47 aufweist. Hier ist der Trockner somit die Leitung 45.

Auch bei dieser Druckförderanlage in Kombination mit Regeneration der Absorptionskolonnen und einem Trockner ergibt sich der sehr gute energetische Wirkungsgrad und der Vorteil eines geringen apparativen Aufwands.

Die Erfindung lässt sich überall dort anwenden, wo Schüttgut mittels Saugförderer oder Druckförderer transportiert wird und gleichzeitig Bedarf an warmer Trocknungsluft besteht. Der Ausdruck "Trockner" ist hier somit in weitem Sinne zu verstehen. Wenn von Luft oder Luftförderung gesprochen wird, gilt dies gleicherweise für andere Gase oder Gasgemische, die von Luft verschieden sind.

## Patentansprüche

1. Vorrichtung zur Saug- oder Druckförderung sowie zur Trocknung von staub- oder granulatförmigem Material, wobei ein Gebläse zur Luftförderung vorgesehen ist, am Gebläse (8) Leitungen zum Führen der verdichteten und erhitzten Abluft angeordnet sind, und wobei zumindest ein Trockner und/oder eine Absorptionskolonne vorgesehen ist, **dadurch gekennzeichnet, dass** die leitungen mit dem Trockner (22,44) und/oder den Absorptionskolonnen (35) zur Zufuhr der während des Fördervorgangs entstehenden Abluft verbunden sind.

2. Vorrichtung nach Anspruch 1, **dadurch gekennzeichnet, dass** das Gebläse (8) zur abluftseitigen Gasverdichtung ausgebildet ist.

3. Vorrichtung nach Anspruch 2, **dadurch gekennzeichnet, dass** das Gebläse ein betriebsmittelfreier Gasverdichter, wie Kolbenverdichter, Schraubenverdichter, Seitenkanalgebläse oder bevorzugt Wälzkolbengebläse ist oder mehrere dieser Verdichter umfasst.

4. Vorrichtung nach einem der Ansprüche 1 bis 3 zur Saugförderung, **dadurch gekennzeichnet, dass** Wenigstens drei Regelkreise vorgesehen sind, nämlich ein Vakuumförderungsregelkreis (20) mit Druckaufnehmer (1) und Vakuumregelventil (2), ein Luftmengenregelkreis mit Frequenzumformer (28) und/oder Rücklufttemperaturregler (19) sowie Ablufttemperaturgeber (27) und frequenzgesteuertem Motor (10), und ein Ablufttemperaturregelkreis (18) mit Trocknungstemperaturgeber (15) und gegebenenfalls dem Kühlwasserregelventil (14).

5. Vorrichtung nach einem der Ansprüche 1 bis 4, **dadurch gekennzeichnet, dass** dem Gebläse (8) abluftseitig ein Abluftkühler (13) nachgeschaltet ist

6. Vorrichtung nach einem der Ansprüche 1 bis 5, **dadurch gekennzeichnet, dass** der Trockner als Materialtrockner z.B. als Ein- oder Mehrzonentrocknungstrichter (22) für das staub- oder granulatförmige Material ausgebildet ist.

7. Vorrichtung nach Anspruch 6, **dadurch gekennzeichnet, dass** die unterste Zone des Trocknungstrichters (22) von einem zusätzlichen Lufttrockner (24) gespeist wird.

8. Vorrichtung nach einem der Ansprüche 1 bis 7, **dadurch gekennzeichnet, dass** zur Trocknung der Ansaugluft ein Absorptionstrockner (Absorptionssäulen 35) dem Gebläse (8) vorgeschaltet ist.

9. Vorrichtung nach Anspruch 8, **dadurch gekennzeichnet, dass** die erhitzte Abluft des Gebläses (8) über Ventile (36, 41) den Absorptionssäulen (35) und/oder dem Materialtrockner (22,44) und/oder der Druckluftleitung (45) als Trockner zuleitbar ist.

## Claims

1. Apparatus for conveying by suction or pressure and also for drying dust-like or granular material, with a blower being provided to convey air, lines being arranged at the blower (8) to guide the compressed and heated exhaust air, and with at least one dryer and/or one absorption column being provided, **characterised in that** the lines are connected to the dryer (22, 44) and/or the absorption columns (35) for the supply of the exhaust air that develops during the conveying process.

2. Apparatus according to claim 1, **characterised in that** the blower (8) is designed to compress gas on the exhaust-air side.

3. Apparatus according to claim 2, **characterised in that** the blower is a gas compressor that is free of operating means, such as a piston compressor, screw-type compressor, side-channel blower or preferably a rolling-piston blower, or comprises a plurality of these compressors.

4. Apparatus according to one of claims 1 to 3 for conveyance by suction, **characterised in that** at least three control loops are provided, namely a vacuum conveyance control loop (20) with a pressure sensor (1) and vacuum control valve (2), an air-quantity control loop with a frequency converter (28) and/or return-air temperature controller (19) and also an exhaust-air temperature transmitter (27) and frequency-controlled motor (10), and an exhaust-air temperature control loop (18) with a drying-temperature transmitter (15) and optionally the cooling-water control valve (14).

5. Apparatus according to one of claims 1 to 4, **characterised in that** connected downstream of the blower (8) on the exhaust-air side there is an exhaust-air cooler (13).

6. Apparatus according to one of claims 1 to 5, **characterised in that** the dryer is formed as a material-dryer, for example as a single- or multiple-zone drying funnel (22) for the dust-like or granular material.

7. Apparatus according to claim 6, **characterised in that** the lowest zone of the drying funnel (22) is fed by an additional air dryer (24).

8. Apparatus according to one of claims 1 to 7, **characterised in that** in order to dry the intake air an absorption dryer (absorption columns 35) is connected upstream of the blower (8).

9. Apparatus according to claim 8, **characterised in that** the heated exhaust air of the blower (8) can be directed by way of valves (36, 41) to the absorption columns (35) and/or to the material-dryer (22, 44) and/or to the compressed air line (45) as a dryer.

## Revendications

1. Dispositif pour l'aspiration ou le transport par pression de gaz ainsi que pour le séchage de matériau pulvérulent ou granulaire, dans lequel il est prévu une machine soufflante pour le refoulement d'air, des conduites étant disposées sur la machine soufflante (8) pour le transport de l'air comprimé réchauffé, et dans lequel il est prévu au moins un sécheur et/ou une colonne d'absorption, **caractérisé par le fait que** les conduites sont reliées au sécheur (22, 44) et/ou aux colonnes d'absorption (35) pour amener l'air produit pendant le processus de refoulement.

2. Dispositif selon la revendication 1, **caractérisé par le fait que** la machine soufflante (8) est agencée pour comprimer le gaz côté sortie.

3. Dispositif selon la revendication 2, **caractérisé par le fait que** la machine soufflante comprend un compresseur de gaz sans matières consommables, tel qu'un compresseur à piston, un compresseur à vis, un compresseur à canal latéral ou de préférence un compresseur à piston rotatif ou plusieurs de ces compresseurs.

4. Dispositif selon une des revendications 1 à 3 pour le transport par aspiration, **caractérisé par le fait qu'**il est prévu au moins trois circuits de régulation, à savoir un circuit de régulation du transport par dépression (20) avec capteur de pression (1) et vanne de régulation de dépression (2), un circuit de régulation du débit d'air avec convertisseur de fréquence (28) et/ou régulateur de température d'air de retour (19) ainsi qu'avec capteur de température d'air refoulé (27) et moteur asservi en fréquence (10) et un circuit de régulation de température d'air refoulé (18) avec capteur de température de séchage (15) et le cas échéant la vanne de régulation d'eau de refroidissement (14).

5. Dispositif selon une des revendications 1 à 4, **caractérisé par le fait qu'**un réfrigérant d'air refoulé (13) est placé derrière la soufflante (8), côté sortie.

6. Dispositif selon une des revendications 1 à 5, **caractérisé par le fait que** le sécheur est agencé en sécheur de matériau, par exemple en trémie de séchage (22) mono ou plurizone pour le matériau pulvérulent ou granulaire.

7. Dispositif selon la revendication 6, **caractérisé par le fait que** la zone la plus basse de la trémie de séchage (22) est alimentée par un sécheur d'air (24) additionnel.

8. Dispositif selon une des revendications 1 à 7, **caractérisé par le fait que** pour le séchage de l'air aspiré un sécheur à absorption (colonne d'absorption 35) est disposé en amont de la machine soufflante (8).

9. Dispositif selon la revendication 8, **caractérisé par le fait que** l'air refoulé réchauffé de la machine soufflante (8) peut être dirigé en tant que moyen de séchage, par l'intermédiaire de vannes (36, 41), vers les colonnes d'absorption (35) et/ou le sécheur de matériau (22,44) et/ou la conduite d'air comprimé (45).
